# EUROPÄISCHE PATENTSCHRIFT

(11) **EP 4 122 291 B1**
(45) Veröffentlichungstag und Bekanntmachung des Hinweises auf die Patenterteilung: **21.01.2026**
(21) Anmeldenummer: 21709952.2
(22) Anmeldetag: 03.03.2021
(51) Int. Cl.: H05B 6/50, H05B 6/62, A23L 5/10, A47J 27/00

(54) **PEF-GARGERÄT UND ENTNEHMBARER GARGUTBEHÄLTER DAFÜR**
PEF COOKING APPLIANCE AND REMOVABLE COOKED GOODS CONTAINER THEREFOR
APPAREIL DE CUISSON PEF ET RÉCIPIENT AMOVIBLE DE PRODUIT À CUIRE ASSOCIÉ

(30) Priorität: 19.03.2020 DE 102020203518
(43) Veröffentlichungstag der Anmeldung: 25.01.2023
(73) Patentinhaber: BSH Hausgeräte GmbH, 81739 München (DE)
(72) Erfinder: HAS, Uwe, 84579 Unterneukirchen (DE); HEIKEL, Barbara, 83278 Traunstein (DE); HIMMEL, Arnulf, 83301 Traunreut (DE); KOCH, Bernhard, 83334 Inzell (DE); STEINBACHER, Manfred, 83334 Inzell (DE); WREHDE, Edith, 83365 Nußdorf (DE)
(86) Internationale Anmeldenummer: PCT/EP2021/055273
(87) Internationale Veröffentlichungsnummer: WO 2021/185578

(56) Entgegenhaltungen:
- EP-A1- 3 193 683
- WO-A1-2011/139144
- WO-A1-2016/008868
- US-A- 5 549 041
- US-A1- 2014 057 025
- US-A1- 2015 163 864

## Beschreibung

Die Erfindung betrifft einen entnehmbaren Gargutbehälter zum Einsatz in einem PEF-Gargerät, aufweisend mindestens zwei Kondensatorplatten, zwischen denen Gargut einfüllbar ist und an welche mit abwechselnder Polarität gepulste PEF-Signale anlegbar sind und mindestens einen an dem Gargutbehälter angeordneten Sensor. Die Erfindung betrifft auch ein PEF-Gargerät zur Aufnahme des Gargutbehälters. Die Erfindung ist insbesondere vorteilhaft anwendbar auf Haushaltsgeräte.

PEF ("Pulsed Electric Field")-Garen, d.h., das Garen von Gargut bzw. Lebensmitteln mittels gepulster Spannungspulse ("PEF-Pulsen"), ist grundsätzlich bekannt. Dabei werden die PEF-Pulse an flächige PEF-Elektroden eines Gargutbehälters angelegt, welche aufgrund der Kontaktierung der PEF-Elektroden mit dem Inhalt des Gargutbehälters einen elektrischen Strom durch den Inhalt des Gargutbehälters erzeugen. Der Inhalt umfasst typischerweise flüssiges Gargut wie Suppe oder in ein Wasserbad eingelegtes Gargut. Der erzeugte Strom fließt auch durch das Gargut, wodurch es gegart wird. Beispielsweise WO 2016/008868 A1 betrifft ein Verfahren zum PEF ("Pulsed Electric Field")-Kochen eines Lebensmittelprodukts in einer Behandlungskammer, wobei die Behandlungskammer zwei gegenüberliegende Wände umfasst, die jeweils eine Elektrode bilden. Das Verfahren umfasst die folgenden Schritte: (a) Platzieren einer Menge des Lebensmittelprodukts, gegebenenfalls in einer umgebenden Flüssigkeit, in der Behandlungskammer zwischen den beiden Elektroden, so dass das Lebensmittelprodukt und / oder die umgebende Flüssigkeit in direktem Kontakt mit den Elektroden stehen; und (b) Anlegen von elektrischen Impulsen, die von einem gepulsten elektrischen Feldgenerator erzeugt werden, an die Elektroden, so dass das Lebensmittelprodukt einem gepulsten elektrischen Feld mit einer Feldstärke von 10 bis 180 V/cm ausgesetzt wird und die Gesamtkochzeit 0,5 bis 1000 s beträgt. Vorzugsweise beträgt die Zahl der Pulse 1 bis 2.000.000, und die Pulse haben jeweils eine Dauer von 1 bis 20000 Mikrosekunden. Das Lebensmittelprodukt und, falls vorhanden, die umgebende Flüssigkeit weisen eine elektrische Leitfähigkeit von 0,01 bis 10 S/m auf. WO 2016/008868 A1 betrifft auch ein Kochsystem, das zum Kochen eines Lebensmittelprodukts gemäß einem solchen Verfahren geeignet ist.

US 2014/057025 A1 (VAN OORD GOVERT [NL]) 27. Februar 2014 (2014-02-27) beschreibt ein System zur Behandlung eines Lebensmittels mittels PEF-Pulsed Electric Field, wobei das System eine Behandlungsschale (2) und eine Kopplungsstation (3), d.h. eine Andockstation für einen PEF-Generator, umfasst.

Bei PEF-Garen, wie auch bei anderen Garverfahren, ist es vorteilhaft, wenn ein Garfortschritt überwachbar ist, z.B. um während des PEF-Garens Betriebsparameter anzupassen (z.B. um eine Art und einen Umfang der Energiezufuhr anzupassen, beispielsweise über eine Variation einer Dauer und/oder Frequenz der PEF-Pulse) um einen Eintritt eines Garendes besonders genau zu ermitteln und/oder um bei einem Eintritt ungeplanter Entwicklungen korrigierend in den Garprozess einzugreifen. Dazu werden häufig Sensoren eingesetzt.

Beim Einsatz von Sensoren, die an einem entnehmbaren Gargutbehälter angeordnet sind, tritt das Problem auf, dass die durch die Spannungspulse bereitgestellte Hochspannung (die mehrere hundert Volt betragen kann) über Sensoren nicht in das (übrige) PEF-Gargerät verschleppt werden darf. Dieser Fall könnte aber eintreten, wenn die Sensoren zur Energieversorgung oder Datenübertragung über elektrische Kontakte mit dem PEF-Gargerät verbunden sind. Wenn Sensoren andererseits von dem restlichen Gargerät elektrisch isoliert an dem Gargutbehälter angebracht sind, ist das restliche Gerät zwar von der Hochspannung sicher abgetrennt, aber es steht keine Energie zur Verfügung, mit welcher diese Sensoren betrieben werden können.

Eine Abhilfe liegt in Sensoren, welche durch kontaktlose Messung aus der Ferne den Gargutbehälter oder dessen Inhalt überwachen können, z.B. IR-Sensoren zur Temperaturmessung. Nachteilig ist jedoch, dass es viele Messparameter gibt, dies sich nicht aus der Ferne messen lassen, z.B. eine Leitfähigkeit eines Inhalts des Gargutbehälters. Diese Sensorsysteme benötigen eine eigene Energieversorgung. Das gleiche gilt für Sensoren zu, die zumindest in der Nähe des Gargutbehälters angeordnet werden müssen. Dies betrifft z.B. Überlaufsensoren, welche erkennen, ob aus dem Gargutbehälter Flüssigkeit oder Schaum austritt, d.h., ob der Gargutbehälter in irgendeiner Weise überkocht.

Eine Möglichkeit, Sensoren autark mit Energie zu versorgen besteht darin, eine Batterie vorzusehen, die sich an dem Gargutbehälter befindet. Dies setzt nachteiligerweise voraus, dass die Batterie immer durch einen Nutzer austauschbar ist, was jedoch aus praktischen Gründen wie einer Nutzerbequemlichkeit wenig wünschenswert ist. Außerdem kann dann ein Problem auftauchen, wenn die Batterie während eines Garablaufs versagt.

Es ist die **Aufgabe** der vorliegenden Erfindung, die Nachteile des Standes der Technik zumindest teilweise zu überwinden und insbesondere eine Möglichkeit bereitzustellen, an einem Gargutbehälter angeordnete Sensoren auf eine betriebssichere und nutzerfreundliche Weise zu betreiben.

Diese Aufgabe wird gemäß den Merkmalen der unabhängigen Ansprüche gelöst. Vorteilhafte Ausführungsformen sind Gegenstand der abhängigen Ansprüche, der Beschreibung und der Zeichnungen.

Die Aufgabe wird gelöst durch einen entnehmbaren Gargutbehälter (auch als "PEF-Gargutbehälter" bezeichenbar) gemäss Anspruch 1.

Dadurch wird der Vorteil erreicht, dass auch im eingesetzten Zustand des Gargutbehälters keine elektrische Verbindung dem mindestens einen Sensor und dem restlichen PEF-Gargerät vorhanden ist. Dadurch wird verhindert, dass die in den Gargutbehälter eingespeisten PEF-Hochspannungssignale über den mindestens einen Sensor in das PEF-Gargerät überspringen können. Dies erhöht vorteilhafterweise die Betriebssicherheit.

Dass der Gargutbehälter entnehmbar ist, bedeutet insbesondere, dass ein Nutzer ihn z.B. zum Befüllen mit Gargut oder mit Wasser und Gargut oder zum Reinigen aus dem PEF-Gargerät entnehmen kann und wieder in das PEF-Gargerät einsetzen kann. Der Gargutbehälter weist zur Einspeisung der durch das PEF-Gargerät erzeugten PEF-Signale mindestens zwei Anschlusskontakte auf.

Die PEF-Elektroden befinden sich typischerweise elektrisch voneinander isoliert im Bereich einer Wandung des Gargutbehälters und nehmen eingefülltes Gargut zwischen sich auf. Die PEF-Signale werden über die Anschlusskontakte an jeweilige PEF-Elektroden geleitet. Die PEF-Elektroden sind insbesondere als - speziell parallel zueinander angeordnete - Kondensatorplatten ausgebildet. Es ist eine Weiterbildung, dass die Kondensatorplatten vertikal ausgerichtet sind. Sie können in der Behandlungskammer stationär oder verschieblich angeordnet sein.

Die PEF-Signale sind als elektrische Pulse mit abwechselnder Polarität geformt, d.h., dass sich die Spannungsrichtung aufeinanderfolgender PEF-Signale oder PEF-Pulse umkehrt ("kommutiert"), also z.B. während eines PEF- Signals eine erste PEF-Elektrode als Pluspol wirkt und die zweite PEF-Elektrode als Minuspol wirkt, während bei einem folgenden PEF-Signal die erste PEF-Elektrode als Minuspol wirkt und die zweite PEF-Elektrode als Pluspol wirkt, usw. Diese Folge der PEF-Pulse kann als ein gepulstes Wechselspannungssignal angesehen werden. Es ist eine Weiterbildung, dass zwischen zwei aufeinanderfolgenden PEF-Signalen eine Pause eingelegt wird.

Der Gargutbehälter kann allgemein auch mehr als zwei PEF-Elektroden aufweisen, insbesondere mehr als zwei Paare von PEF-Elektroden.

Der mindestens eine Sensor kann ein oder mehrere Sensoren umfassen. Mindestens ein Sensor kann in den Gargutbehälter ragen. Mindestens ein Sensor kann bei gefülltem Gargutbehälter in dessen Inhalt ragen (z.B. ein Temperatursensor, ein Füllstandssensor und/oder ein Leitfähigkeitssensor). Mindestens ein Sensor kann so angeordnet sein, dass er beabstandet von dem Inhalt an dem Gargutbehälter angeordnet ist (z.B. ein Überlaufsensor, ein Temperatursensor und/oder ein Füllstandssensor). Der mindestens eine Sensor ist mit der Sensorschaltung verschaltet. Es ist eine Weiterbildung, dass mindestens ein Sensor an der Behandlungskammer angeordnet ist.

Die Sensorschaltung dient dazu, von dem mindestens einen Sensor abgefühlte Messignale zu empfangen und die Messsignale, ggf. nach einer Verarbeitung (z.B. einer A/D-Wandlung), als Messdaten nichtelektrisch auf das PEF-Gargerät zu übertragen. Die Sensorschaltung ist eine Komponente des Gargutbehälters und wird mit dem Gargutbehälter aus dem PEF-Gargerät entnommen.

Die Sensorschaltung ist dazu außerhalb der Behandlungskammer des Gargutbehälters angeordnet. Es ist eine Weiterbildung, dass die Sensorschaltung unterhalb der Behandlungskammer angeordnet ist, da dies thermisch besonders vorteilhaft ist. Es ist eine Weiterbildung, dass die Sensorschaltung flüssigkeitsdicht gekapselt ist, so dass der Gargutbehälter einschließlich der Sensorschaltung beispielsweise auch in einer Spülmaschine gespült werden kann ("spülmaschinenfest gekapselt"). Die Kapselung kann z.B. durch Verguss der Sensorschaltung mit Silikon umgesetzt sein.,

Dass die Energieversorgungseinrichtung batterielos ist, umfasst insbesondere, dass die Energieversorgungseinrichtung keinen chemischen Energiespeicher wie eine Batterie oder einen Akkumulator (im Folgenden nur als "Batterie" bezeichnet) aufweist. So wird der Vorteil erreicht, dass ein Nutzer keine Batterie zu wechseln braucht, was eine Nutzerbequemlichkeit und eine Betriebssicherheit erhöht. Wird der Gargutbehälter aus dem PEF-Gargerät entnommen, kann dann ohne Batterie auch die Energieversorgungseinrichtung keine elektrische Energie mehr bereitstellen.

Die Auswerteschaltung wird von der Energieversorgungseinrichtung mit elektrischer Energie versorgt. Sie dient dazu, die empfangenen Messsignale zu verarbeiten, z.B. sie zu digitalisieren, werteumzuwandeln (z.B. ein Spannungssignal in einen Temperatur-, Leitfähigkeits- usw. Wert umzuwandeln), usw.

Die Datenübertragungseinrichtung wird ebenfalls von der Energieversorgungseinrichtung mit elektrischer Energie versorgt. Sie kann die von der Auswerteschaltung empfangenden Daten (z.B. Messdaten) und ggf. weitere Daten wie Statusdaten ohne elektrische Verbindung auf das PEF-Gargerät übertragen. Die Datenübertragungseinrichtung kann die Daten z.B.
- über Funk (z.B. Bluetooth, NFC, WLAN, usw.),
- induktiv oder transformatorisch (z.B. über eine Spule oder Transformatorhälfte),
- optisch (z.B. über eine Leuchtdiode) und/oder
- akustisch (z.B. als Ultraschallsignale)

auf das PEF-Gargerät übertragen. Es kann aufgrund der sich so ergebenden galvanischen Trennung von dem PEF-Gargerät also auch über die Datenverbindung keine PEF-Hochspannung auf das PEF-Gargerät überschlagen.

Die Datenübertragungseinrichtung ist zumindest zur unidirektionalen Übertragung von Daten auf das PEF-Gargerät eingerichtet. Allgemein kann die Datenübertragungseinrichtung aber auch zum Empfang von Daten (z.B. Steuerbefehlen) von dem PEF-Gargerät eingerichtet sein, also bidirektional Daten übertragen. Solche Steuerbefehle können z.B. Befehle zur motorische Bewegung zumindest einer der PEF-Elektroden umfassen.

Es ist eine Ausgestaltung, dass die Sensorschaltung über einen Luftspalt induktiv mit elektrischer Energie aus dem PEF-Gerät speisbar ist. Speziell kann die Energieversorgungseinrichtung ein von einem PEF-Gargerät ausgesandtes magnetisches Wechselfeld in eine Induktionsspannung umwandeln und die Induktionsspannung zur Versorgung der Sensorschaltung mit Betriebsenergie nutzen, ggf. nach einer Umwandlung (z.B. Gleichrichtung, Glättung, Stabilisierung, usw.). Die Energieversorgungseinrichtung ist in anderen Worten zum induktiven Energieempfang ausgestaltet. Die Energieversorgungseinrichtung kann dazu mindestens eine Spule ("Sekundärspule") aufweisen, während das PEF-Gargerät eine damit induktiv oder transformatorisch koppelbare Spule ("Primärspule") aufweist. Dies ist auch als transformatorische Energieübertragung bekannt, wenn die beiden Spulen wie Transformatorhälften wirken.

Wird über diese beiden Spulen nicht nur die zum Betrieb der Sensorschaltung benötigte Betriebs- oder Nutzenergie übertragen, sondern auch Daten (z.B. durch Spannungs- und/oder Amplitudenmodulation auf der Primärseite und/oder Lastvariation auf der Sekundärseite), kann die Datenübertragungseinrichtung in die Energieversorgungseinrichtung integriert sein. So kann vorteilhafterweise auf eine dedizierte Datenübertragungseinrichtung verzichtet werden.

Gemäss der Erfindung wird die Sensorschaltung mittels der an den Gargutbehälter angelegten gepulsten PEF-Signale mit elektrischer Energie speisbar. In anderen Worten wird von den in den Gargutbehälter eingespeisten PEF-Signalen Energie zum Betrieb der Sensorschaltung abgezweigt. Dies ergibt den Vorteil, dass das PEF-Gargerät besonders einfach ausgestaltbar ist und zudem besonders viel Energie zum Betrieb der Sensorschaltung zur Verfügung steht. Außerdem lässt sich diese Ausgestaltung besonders kompakt und preiswert umsetzen.

Es ist eine Ausgestaltung, dass die Sensorschaltung mittels eines in Reihe zu den PEF-Elektroden geschalteten Widerstands ("Vorwiderstands") mit Spannung versorgbar ist. Dadurch kann vorteilhafterweise auf einfache Weise erreicht werden, dass die an die Sensorschaltung angelegte Spannung geringer ist als die Hochspannung der PEF-Signale, welche mehrere hundert Volt betragen kann, ggf. sogar 600 V oder mehr. Außerdem ist dieser Spannungsabgriff vorteilhafterweise unabhängig von einer Art und Höhe des Innenwiederstandes der Behandlungskammer, d.h., von dem darin eingefüllten Inhalt (Gargut und ggf. Flüssigkeit). Die über den Vorwiderstand abgegriffene, gepulste Spannung stellt hier also die Eingangsspannung für die Sensorschaltung dar.

Es ist eine Ausgestaltung, dass die Sensorschaltung über einen mit einer der PEF-Elektroden verbundenen kapazitiven Spannungsteiler mit Spannung versorgbar ist. Dies ergibt den Vorteil, dass Verluste besonders gering gehalten werden können und zudem auch hier die Spannungsversorgung der Sensorschaltung vorteilhafterweise unabhängig von einer Art und Höhe des Innenwiederstandes der Behandlungskammer ist.

Es ist eine Ausgestaltung, dass die Sensorschaltung über eine zwischen einer der PEF-Elektroden und einer in der Behandlungskammer zwischen den PEF-Elektroden in der Behandlungskammer angeordneten dedizierten Elektrode ("Zusatzelektrode") mit Spannung versorgbar ist. Die Zusatzelektrode ist so angeordnet, dass sie ebenfalls den Inhalt des Gargutbehälters kontaktiert. Dabei wird ausgenutzt, dass bei einem mit Flüssigkeit gefülltem Gargutbehälter die Flüssigkeit zwischen der einen PEF-Elektrode und der Zusatzelektrode als eine Widerstandsreihe wirkt und somit auf eine dedizierte Kapazität zur kapazitiven Spannungsteilung verzichtet werden kann. Zudem lässt sich vorteilhafterweise die so abgegriffene Spannung, die einer Teilspannung der an beiden PEF-Elektroden anliegenden Pulsspannung entspricht, einfach durch einen Abstand der Zusatzelektrode zu der ebenfalls zum Abgriff verwendeten PEF-Elektrode festlegen.

Es ist eine Weiterbildung, dass die Sensorschaltung direkt an die eine PEF-Elektrode angelegt ist. Es ist eine Weiterbildung, dass die Sensorschaltung über einen Vorwiderstand an die eine PEF-Elektrode angelegt ist.

Es ist eine Ausgestaltung, dass die Sensorschaltung über zwei in der Behandlungskammer zwischen den PEF-Elektroden beabstandet von einander angeordneten Zusatzelektroden mit Spannung versorgbar ist. Die Spannungsversorgung der Sensorschaltung erfolgt somit über die beiden Zusatzelektroden. Auf einen Anschluss an eine der beiden PEF-Elektroden kann dadurch vorteilhafterweise verzichtet werden. Ein weiterer Vorteil besteht darin, dass so ein Überschlag der an den PEF-Elektroden anlegbaren Pulsspannung auf die Sensorschaltung besonders effektiv verhinderbar ist.

Es ist eine Ausgestaltung, dass die Energieversorgungseinrichtung einen Spannungsgleichrichter, einen Energiespeicher und/oder einen Spannungsstabilisator aufweist. Dies ergibt den Vorteil, dass die elektrischen und/oder elektronischen Bauteile der Auswerteeinrichtung und der Datenübertragungseinrichtung besonders zuverlässig mit elektrischer Energie versorgbar sind.

Allgemein ist die Art der Sensoren und/oder und die Art der von ihnen abgefühlten Messgröße(n) nicht beschränkt und kann beispielsweise:
- einen Temperatursensor,
- einen Leitfähigkeitssensor,
- einen Füllstandssensor und/oder
- einen Überlaufsensor
usw. umfassen.

Der Temperatursensor kann ein den Inhalt des Gargutbehälters kontaktierender Sensor sein, z.B. ein Thermoelement, und/oder ein berührungslos messender Temperatursensor, z.B. ein IR-Sensor, sein.

Aus den Messwerten des Leitfähigkeitssensors kann z.B. auf einen Salzgehalt einer in dem Gargutbehälter vorhandenen Flüssigkeit (z.B. Wasser) geschlossen werden. Aus der Leitfähigkeit kann wiederum auf die Impedanz des Inhalts der Behandlungskammer geschlossen werden.

Der Füllstandssensor kann z.B. einen Schwimmer aufweisen oder ein berührungslos messender Ultraschallsensor sein.

Der Überlaufsensor kann z.B. ein Schaumsensor sein.

Die Aufgabe wird auch gelöst durch ein PEF-Gargerät, aufweisend
- einen PEF-Signalgenerator zur Erzeugung kommutierend polarisierter PEF-Signale,
- einen Aufnahmeraum für den Gargutbehälter,
- mit Ausgängen des PEF-Signalgenerators verbundene Anschlussgegenkontakte zur Kontaktierung von Anschlusskontakten des Gargutbehälters,
- eine Datenübertragungseinrichtung zum Empfang von Daten der Datenübertragungseinrichtung des Gargutbehälters und
- eine mit der Datenübertragungseinrichtung der PEF-Gargeräts verbundene Steuereinrichtung, die dazu eingerichtet ist, den PEF-Signalgenerator beruhend auf den empfangenen Daten anzusteuern.

Das PEF-Gargerät kann analog zu dem Gargutbehälter ausgebildet werden und weist die gleichen Vorteile auf.

So ist es eine Ausgestaltung, dass das PEF-Gargerät eine Spule zur induktiven oder transformatorischen Kopplung mit dem Gargutbehälter aufweist. Das PEF-Gargerät kann dabei eine Primärspule zur induktiven oder transformatorischen Kopplung mit einer Sekundärspule des Gargutbehälters aufweisen.

Beispielsweise kann die Steuereinrichtung dazu eingerichtet sein, den die Frequenz der gepulsten PEF-Signale bzw. PEF-Pulse beruhend auf den empfangenen Daten anzupassen.

Die Aufgabe wird ferner gelöst durch ein System mit einem PEF-Gargerät wie oben beschrieben mit einem darin eingesetzten Gargutbehälter wie oben beschrieben. Der Gargutbehälter kann aber auch als ein Teil des PEF-Gargeräts angesehen werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt als Schnittdarstellung in Seitenansicht eine vereinfachte Skizze eines PEF-Gargeräts mit einem darin eingesetzten Gargutbehälter gemäß einem ersten Ausführungsbeispiel;
- Fig.2: zeigt als Schnittdarstellung in Seitenansicht eine vereinfachte Skizze eines Gargutbehälters gemäß einem zweiten Ausführungsbeispiel;
- Fig.3: zeigt eine detailliertere Skizze einer Sensoreinrichtung des Gargutbehälters gemäß dem zweiten Ausführungsbeispiel;
- Fig.4: zeigt als Schnittdarstellung in Seitenansicht eine vereinfachte Skizze eines Gargutbehälters gemäß einem dritten Ausführungsbeispiel;
- Fig.5: zeigt als Schnittdarstellung in Seitenansicht eine vereinfachte Skizze eines Gargutbehälters gemäß einem vierten Ausführungsbeispiel; und
- Fig.6: zeigt als Schnittdarstellung in Seitenansicht eine vereinfachte Skizze eines Gargutbehälters gemäß einem fünften Ausführungsbeispiel.

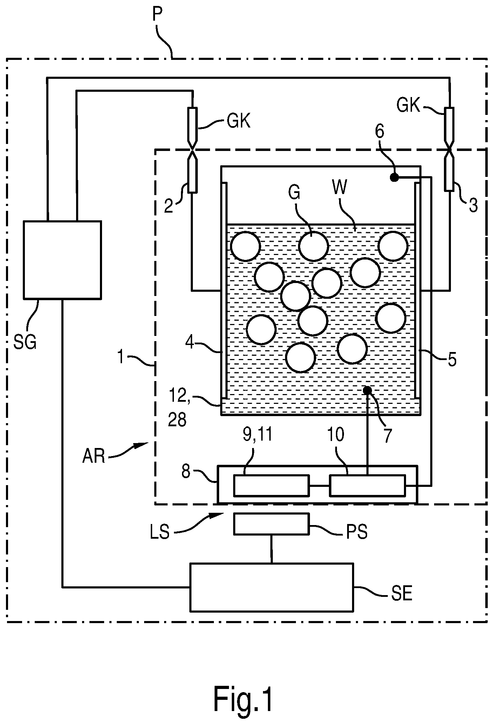

**Fig.1** zeigt als Schnittdarstellung in Seitenansicht eine vereinfachte Skizze eines PEF-Gargeräts P mit einem darin eingesetzten PEF-Gargutbehälter 1 mit einem Aufnahmeraum AR für den Gargutbehälter 1. Das PEF-Gargerät P weist ferner einen PEF-Signalgenerator SG zur Erzeugung gepulster PEF-Hochspannungssignale abwechselnder Polarität auf, also zur Erzeugung einer gepulsten Wechselspannung. Die Signalausgänge PEF-Signalgenerator SG sind mit jeweiligen Anschlussgegenkontakten GK im Bereich des Aufnahmeraums AR verbunden, welche bei eingesetztem Gargutbehälter 1 entsprechende Anschlusskontakte 2, 3 des Gargutbehälters 1 kontaktieren.

Die Anschlusskontakte 2, 3 des Gargutbehälters 1 sind mit einer ersten PEF-Elektrode 4 bzw. einer zweiten PEF-Elektrode 5 des Gargutbehälters 1 verbunden, die sich in einer mit Gargut G und ggf. Wasser W füllbaren Behandlungskammer 28 befinden, welche durch eine elektrisch nichtleitende Behälterwandung 12 begrenzt ist. Die PEF-Elektroden 4, 5 sind hier plattenförmig und vertikal ausgerichtet. Eingefülltes Gargut G befindet sich zwischen den PEF-Elektroden 4, 5. Die PEF-Elektroden 4, 5 sind durch die Behälterwandung 12 elektrisch gegeneinander isoliert. Die PEF-Signale sind also an die PEF-Elektroden 4, 5 anlegbar, wodurch in dem Inhalt G, W des Gargutbehälters 1 zwischen den PEF-Elektroden 4, 5 ein Stromfluss erzeugt wird, mittels dessen auf grundsätzlich bekannte Weise das Gargut G behandelbar (garbar oder erwärmbar) ist.

Der Gargutbehälter 1 weist ferner ein oder mehrere (hier: zwei) Sensoren 6 und 7 auf, mittels derer Garparameter wie eine Temperatur, eine Leitfähigkeit des Wassers W, ein Füllstand des Wassers W, eine Überlaufen des Wassers W usw. überwachbar ist. Vorliegend ist der Sensor 6 außerhalb des durch den Inhalt G, W des Gargutbehälters 1 eingenommenen Raums der Behandlungskammer 28 angeordnet, während der Sensor 7 in diesen Raum ragt.

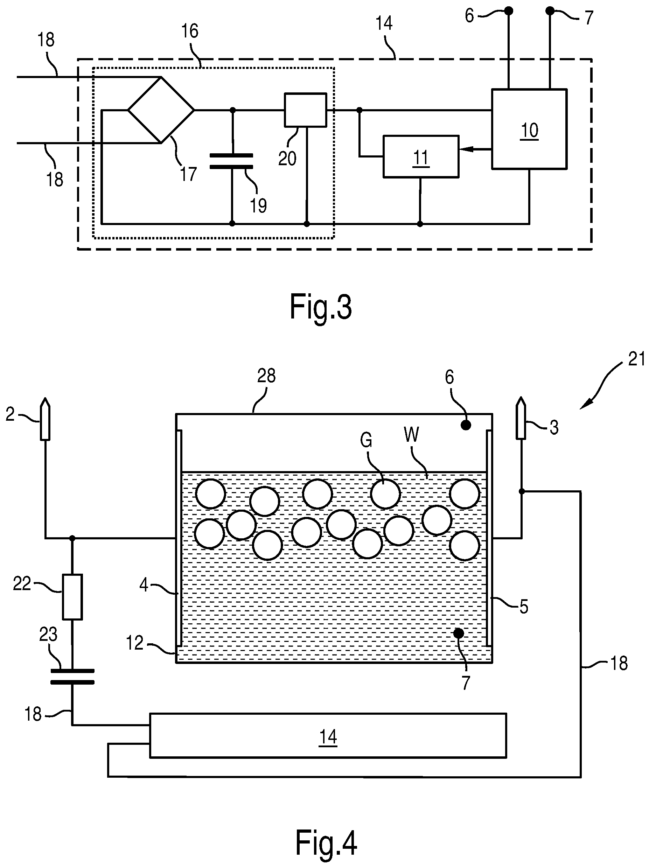

Der Gargutbehälter 1 weist außerdem eine Sensorschaltung 8 auf, die eine batterielose Energieversorgungseinrichtung 9, eine mit den Sensoren 6, 7 und der Energieversorgungseinrichtung 9 verbundene Auswerteschaltung 10 und eine mit der Auswerteschaltung 10 verbundene Datenübertragungseinrichtung 11 aufweist. Vorliegend ist die Energieversorgungseinrichtung 9 eine induktiv von einer Primärspule PS des PEF-Gargeräts P mit elektrischer Nutz- oder Betriebs-Energie speisbare Einrichtung mit einer Abnehmerspule (o. Abb.) bzw. Sekundärspule. Die Primärspule PS und die Sekundärspule bilden ein Spulenpaar, z.B. analog zu Transformatorhälften. Die Energieversorgungseinrichtung 9 kann auch einen Spannungsgleichrichter 17, einen Energiespeicher 18 und/oder einen Spannungsstabilisator 20 (siehe Fig.3) aufweisen.

Die Energieversorgungseinrichtung 9 versorgt die Auswerteschaltung 10 mit Betriebsstrom, so dass die Auswerteschaltung 10 die Messsignale der Sensoren 6, 7 aufnehmen und verarbeiten (z.B. digitalisieren, ggf. werteumwandeln usw.) kann. Die von der Auswerteschaltung 10 ausgegebenen (z.B. digitalisierten, ggf. werteumgewandelten usw.) Messdaten werden an die Datenübertragungseinrichtung 11 weitergleitet, welche die Messdaten nichtelektrisch an eine Steuereinrichtung SE des PEF-Gargeräts P überträgt. Die Steuereinrichtung SE kann zumindest den PEF-Signalgenerator SG beruhend auf den von ihr empfangenen Messdaten ansteuern.

Die Datenübertragungseinrichtung 11 nutzt in dem gezeigten Ausführungsbeispiel zur Datenübertragung auf das PEF-Gargerät P die Sekundärspule, wobei die Primärspule PS des PEF-Gargeräts P als Datenempfangsspule dient. Bei Datenübertragung von dem PEF-Gargerät P den Gargutbehälter dient die Sekundärspule als Datenempfangsspule.

Die Datenübertragung kann also ebenfalls induktiv erfolgen, und die Datenübertragungseinrichtung 11 und die Energieversorgungseinrichtung 9 sind hier ineinander integriert. Werden Daten über das gleiche Spulenpaar wie die Betriebsenergie übertragen, kann die Datenübertragung von der Primärspule auf die Sekundärspule z.B. durch Amplituden- und/oder Spannungsmodulation der an die Primärspule PS angelegten Spannung und bei Übertragung von Daten von der Sekundärspule auf die Primärspule durch Modulation der abgenommenen Last erfolgen.

Jedoch kann die Datenübertragung induktiv auch über ein dediziertes Spulenpaar erfolgen. Dabei erfolgt die Datenübertragung zur Vermeidung eines Übersprechens zwischen dem Nutzenergie-Spulenpaar und dem Datenübertragungs-Spulenpaar vorteilhafterweise so, dass ein zur Datenübertragung verwendete Trägerfrequenz ausreichend weit von der Frequenz der induktiven Energieübertragung und auch von der Frequenz des PEF-Stromes entfernt liegt (einschließlich weit entfernt von den jeweiligen ersten Oberwellen).

Bei der induktiven Energie- und Datenübertragung sind die Sensoren 6, 7 galvanisch von dem PEF-Gargerät P über einen Luftspalt LS zwischen der Primärspule PS und der Sekundärspule voneinander getrennt. Dies gilt analog bei der Verwendung eines dedizierten Datenübertragungs-Spulenpaars.

Alternativ kann eine dedizierte Datenübertragungseinrichtung 11 vorhanden sein (o. Abb.), welche Daten z.B. über Funk, optisch, induktiv oder über Schall auf das PEF-Gargerät P übertragen kann. Das PEF-Gargerät P kann dann eine entsprechende, mit der Steuereinrichtung SE verbundene Datenempfangseinrichtung (o. Abb.) aufweisen. Auch hierdurch wird eine galvanische Trennung der Sensoren 6, 7 von dem PEF-Gargerät P erreicht.

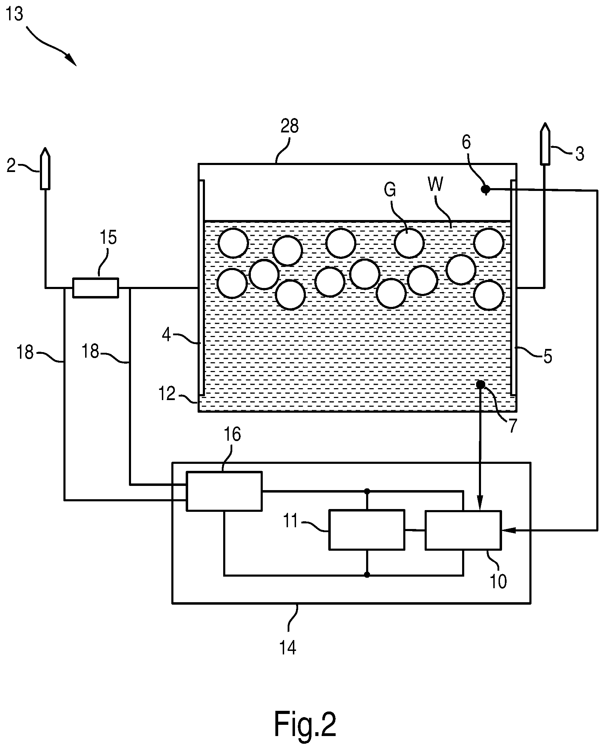

**Fig.2** zeigt als Schnittdarstellung in Seitenansicht eine vereinfachte Skizze eines Gargutbehälters 13. Der Gargutbehälter 13 unterschiedet sich von dem Gargutbehälter 1 dadurch, dass die Sensorschaltung 14 nicht induktiv von dem PEF-Gargerät (o. Abb.) mit Energie versorgt wird, sondern seine zum Betrieb benötigte Energie (z.B. einen Betriebsstrom) von den PEF-Signalen abzweigt.

Dazu ist mit der ersten PEF-Elektrode 4 ein Widerstand ("Vorwiderstand" 15) elektrisch in Reihe geschaltet, über den die Versorgungsspannung für die Energieversorgungseinrichtung 16 abgegriffen wird. Der Vorwiderstand 15 kann auch dazu genutzt werden, einen zwischen den PEF-Elektroden 4, 5 fließenden Strom ("Behandlungsstrom") zu begrenzen.

In dem zugehörigen PEF-Gargerät (o. Abb.) ist keine Primärspule mehr vorhanden, aber es ist eine mit der Steuereinrichtung SE verbundene Datenempfangseinrichtung (o. Abb.) vorhanden, welche mit der Datenübertragungseinrichtung 11 des Gargutbehälters 13 kommunizieren kann, und zwar entweder unidirektional zum Empfang von Messdaten, Statusdaten usw. oder bidirektional zum Empfang von Messdaten, Statusdaten usw. und zur Aussendung von Steuerbefehlen usw. zum Gargutbehälter 13.

**Fig.3** zeigt eine detailliertere Skizze der Sensorschaltung 14, insbesondere der zugehörigen Energieversorgungseinrichtung 16. Die Energieversorgungseinrichtung 16 weist einen Gleichrichter 17, z.B. eine Graetz-Schaltung, auf, dessen Eingänge an Versorgungsleitungen 18 angeschlossen sind. Über die Versorgungsleitungen 18 wird die an dem Vorwiderstand 15 abgegriffene Spannung an den Gleichrichter 17 angelegt.

Den Ausgängen des Gleichrichters 17 ist eine Kapazität 19 parallelgeschaltet. Sie dient dazu, die Energie der von dem Gleichrichter 17 ausgegebenen gleichgerichteten Spannungspulse zu speichern und ggf. zu glätten.

An die Kapazität 19 ist eine Stabilisatorschaltung 20 angeschlossen, welche die von der Kapazität 19 bereitgestellte Spannung in eine zum Betrieb der Auswerteschaltung 10 und der Datenübertragungseinrichtung 11 geeignete(re) Betriebsspannung umwandelt. Die Auswerteschaltung 10 und die Datenübertragungseinrichtung 11 sind der Stabilisatorschaltung 20 nachgeschaltet und beziehen über sie ihre Betriebsspannung.

**Fig.4** zeigt als Schnittdarstellung in Seitenansicht eine vereinfachte Skizze eines Gargutbehälters 21. Der Gargutbehälter 21 unterscheidet sich von dem Gargutbehälter 13 dadurch, dass die Energieversorgungseinrichtung 16 über ihre Versorgungsleitungen 18 nun einerseits über eine Reihenschaltung eines ohmschen Widerstands 22 und einer Kapazität 23 an die erste PEF-Elektrode 4 und andererseits direkt an die zweite PEF-Elektrode 4 angeschlossen ist. Der Widerstand 22 dient dazu, die Steilheit der Flanken der über den Anschlusskontakt 2 eingespeisten PEF-Pulse zu verringern und/oder eine Eingangsspannung in die Energieversorgungseinrichtung 16 zu verringern.

Dieses Ausführungsbeispiel ist besonders vorteilhaft, da besonders geringe Verluste auftreten und zudem eine Art und Höhe eines durch den Inhalt G, W vorgegebenen Innenwiderstandes zwischen den PEF-Elektroden 4, 5 keine Rolle spielen.

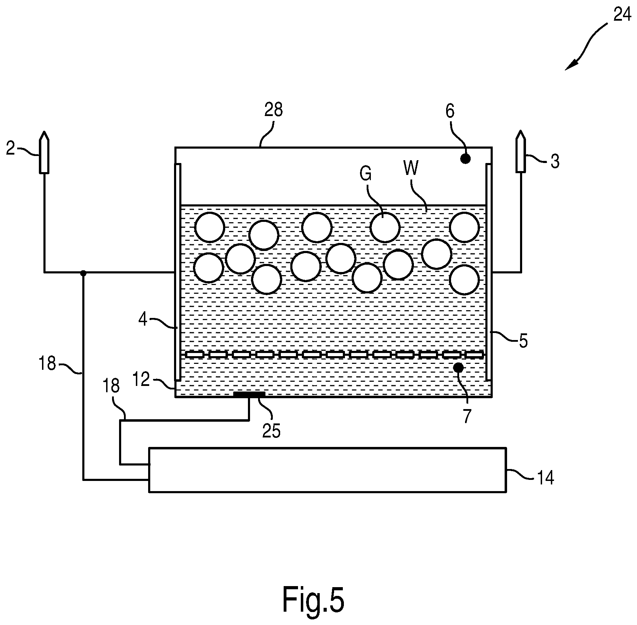

**Fig.5** zeigt als Schnittdarstellung in Seitenansicht eine vereinfachte Skizze eines Gargutbehälters 24. Der Gargutbehälter 24 unterscheidet sich von den Gargutbehältern 1, 13 und 21 dadurch, dass die Energieversorgungseinrichtung 16 über ihre Versorgungsleitungen 18 nun einerseits an die erste PEF-Elektrode 4 und andererseits an eine zwischen den PEF-Elektroden 4, 5 angeordnete, den Inhalt G, W des Gargutbehälters 24 kontaktierende Elektrode ("Zusatzelektrode" 25) angeordnet ist. Die Zusatzelektrode 25 ist hier bodenseitig an der Behälterwandung 12 angeordnet.

Dabei wird ausgenutzt, dass das Wasser W zwischen den PEF-Elektroden 4, 5 wie ein (molekularer) Spannungsteiler wirkt, wie durch die eingezeichnete Widerstandskette grob angedeutet. Die an der Energieversorgungseinrichtung 16 anliegende Spannung entspricht somit zumindest ungefähr einer Teilspannung der an den PEF-Elektroden 4, 5 anliegenden Spannung. Diese Teilspannung ist zumindest ungefähr proportional zu dem Abstand der Zusatzelektrode 25 zu der ersten PEF-Elektrode 4: befindet sich die Zusatzelektrode 25 beispielsweise in der Mitte zwischen den beiden PEF-Elektroden 4, 5, liegt an den Anschlussleitungen 18 etwa die Hälfte der vollen PEF-Spannung an, befindet sich die Zusatzelektrode 25 in Bezug auf die erste PEF-Elektrode 4 an einem Drittel des Abstands zwischen den beiden PEF-Elektroden 4, 5 liegt an den Anschlussleitungen 18 etwa ein Drittel der vollen PEF-Spannung an, usw.

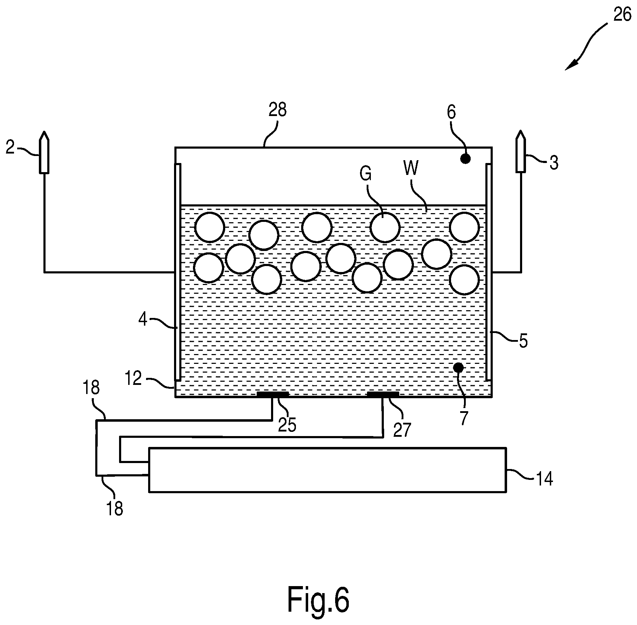

**Fig.6** zeigt als Schnittdarstellung in Seitenansicht eine vereinfachte Skizze eines Gargutbehälters 26. Der Gargutbehälter 26 unterscheidet sich von dem Gargutbehälter 24 dadurch, dass die Energieversorgungseinrichtung 16 über ihre Versorgungsleitungen 18 nun an zwei zwischen den PEF-Elektroden 4, 5 zueinander beabstandet angeordneten, den Inhalt G, W des Gargutbehälters 24 kontaktierende Zusatzelektroden 25 und 27 angeschlossen sind. Die beiden Zusatzelektroden 25, 27 sind hier beispielhaft bodenseitig an der Behälterwandung 12 angeordnet. In zu Fig.5 analoger Betrachtung ist die an den Zusatzelektroden 25 und 27 und damit an der Energieversorgungseinrichtung 16 anliegende Teilspannung zumindest ungefähr proportional zu dem in Normalenrichtung zwischen den PEF-Elektroden 4, 5 vorliegenden Abstand der beiden Zusatzelektroden 25 und 27 zueinander, geteilt durch den Abstand der beiden PEF-Elektroden 4, 5 : weisen die beiden Zusatzelektroden 25, 27 beispielsweise einen Abstand zueinander auf, welcher der Hälfte des Abstands zwischen den beiden PEF-Elektroden 4, 5 beträgt, liegt an den Anschlussleitungen 18 etwa die Hälfte der vollen PEF-Spannung an, usw. Je geringer der Abstand zwischen den beiden Zusatzelektroden 25, 27 ist, desto geringer ist auch die daran anliegende Teilspannung.

In den obigen Figuren ist die Sensorschaltung 8, 14 unterhalb der Behandlungskammer 28 eingezeichnet. Diese Lage hat den Vorteil, das dort mit geringeren Temperaturen zu rechnen ist als etwa oberhalb der Behandlungskammer 28. Allgemein kann die Sensorschaltung jedoch an jeder geeigneten Stelle rund um die Behandlungskammer 28 angebracht sein..

Selbstverständlich ist die vorliegende Erfindung nicht auf das gezeigte Ausführungsbeispiel beschränkt.

Es kann die in Fig.4 gezeigte Reihenschaltung aus Widerstand 22 und Kapazität 23 des Gargutbehälters 21 auch bei den Gargutbehältern 13, 24, und 26 verwendet werden. Ferner kann z.B. der Vorwiderstand 15 auch bei den Gargutbehältern 1, 21, 24, und 26 verbaut sein.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

### Bezugszeichenliste

- 1: Gargutbehälter
- 2: Anschlusskontakt
- 3: Anschlusskontakt
- 4: Erste PEF-Elektrode
- 5: Zweite PEF-Elektrode
- 6: Sensor
- 7: Sensor
- 8: Sensorschaltung
- 9: Energieversorgungseinrichtung
- 10: Auswerteschaltung
- 11: Datenübertragungseinrichtung
- 12: Behälterwandung
- 13: Gargutbehälter
- 14: Sensorschaltung
- 15: Vorwiderstand
- 16: Energieversorgungseinrichtung
- 17: Gleichrichter
- 18: Versorgungsleitung
- 19: Kapazität
- 20: Stabilisatorschaltung
- 21: Gargutbehälter
- 22: Widerstand
- 23: Kapazität
- 24: Gargutbehälter
- 25: Zusatzelektrode
- 26: Gargutbehälter
- 27: Zusatzelektrode
- 28: Behandlungskammer
- AR: Aufnahmeraum
- LS: Luftspalt
- G: Gargut
- GK: Anschlussgegenkontakt
- P: PEF-Gargerät
- PS: Primärspule
- SE: Steuereinrichtung
- SG: PEF-Signalgenerator
- W: Wasser

## Patentansprüche

1. Entnehmbarer Gargutbehälter (13; 21; 24; 26) zum Einsatz in einem PEF-Gargerät (P), aufweisend
- eine Behandlungskammer (28) mit mindestens zwei PEF-Elektroden (4, 5), zwischen denen Gargut (G) einfüllbar ist und an welche mit abwechselnder Polarität gepulste PEF-Signale anlegbar sind,
- mindestens einen Sensor (6, 7) und
- eine Sensorschaltung (8; 14), umfassend eine galvanisch von dem PEF-Gargerät (P) getrennte, batterielose Energieversorgungseinrichtung (9; 16), eine mit dem mindestens einen Sensor (6, 7) und der Energieversorgungseinrichtung (9; 16) verbundene Auswerteschaltung (10) und eine mit der Auswerteschaltung (10) und der Energieversorgungseinrichtung (9; 16) verbundene Datenübertragungseinrichtung (11), die dazu eingerichtet ist, von der Auswerteschaltung (10) empfangene Daten nichtelektrisch zu übertragen,
- wobei die Sensorschaltung (16) mittels der an den Gargutbehälter (13; 21; 24; 26) angelegten gepulsten PEF-Signale mit elektrischer Energie speisbar ist.

2. Gargutbehälter (13) nach Anspruch 1, wobei die Sensorschaltung (16) mittels eines über einen in Reihe zu den PEF-Elektroden (4, 5) geschalteten Vorwiderstands (15) mit Spannung versorgbar ist.

3. Gargutbehälter (21) nach Anspruch 1, wobei die Sensorschaltung (16) über einen mit einer der PEF-Elektroden (4) verbundenen kapazitiven Spannungsteiler (19, 23) mit Spannung versorgbar ist.

4. Gargutbehälter (24) nach Anspruch 1, wobei die Sensorschaltung (14) über eine zwischen einer der PEF-Elektroden (4) und einer in der Behandlungskammer (28) zwischen den PEF-Elektroden (4, 5) angeordneten Zusatzelektrode (25) mit Spannung versorgbar ist.

5. Gargutbehälter (26) nach Anspruch 1, wobei die Sensorschaltung (14) über zwei in der Behandlungskammer (28) zwischen den PEF-Elektroden (4, 5) beabstandet voneinander angeordneten Zusatzelektroden (25, 27) mit Spannung versorgbar ist.

6. Gargutbehälter (13; 21; 24; 26) nach einem der vorhergehenden Ansprüche, wobei die Energieversorgungseinrichtung (9; 14) einen Spannungsgleichrichter (17), einen Energiespeicher (19) und/oder einen Spannungsstabilisator (20) aufweist.

7. Gargutbehälter (13; 21; 24; 26) nach einem der vorhergehenden Ansprüche, wobei die Datenübertragungseinrichtung (11) eine funkbasiert, induktiv koppelnd, optisch und/oder akustisch Daten übertragende Datenübertragungseinrichtung (11) ist.

8. Gargutbehälter (13; 21; 24; 26) nach einem der vorhergehenden Ansprüche, wobei der mindestens eine Sensor (6, 7) einen Temperatursensor umfasst.

9. Gargutbehälter (13; 21; 24; 26) nach einem der vorhergehenden Ansprüche, wobei der mindestens eine Sensor (6, 7) einen Leitfähigkeitssensor umfasst

10. Gargutbehälter (13; 21; 24; 26) nach einem der vorhergehenden Ansprüche, wobei der mindestens eine Sensor (6, 7) einen Füllstandssensor umfasst.

11. Gargutbehälter (13; 21; 24; 26) nach einem der vorhergehenden Ansprüche, wobei der mindestens eine Sensor (6, 7) einen Überlaufsensor umfasst.

12. System (P, 13; 21; 24; 26),
aufweisend ein PEF-Gargerät (P), aufweisend
- einen PEF-Signalgenerator (SG) zur Erzeugung kommutierend polarisierter PEF-Signale,
- einen Aufnahmeraum (AR) für den Gargutbehälter (13; 21; 24; 26) nach einem der vorhergehenden Ansprüche,
- mit Ausgängen des PEF-Signalgenerators verbundene Anschlussgegenkontakte (GK) zur Kontaktierung von Anschlusskontakten (2, 3) des Gargutbehälters (13; 21; 24; 26),
- eine Datenübertragungseinrichtung (PS) zum Empfang von Daten der Datenübertragungseinrichtung (11) des Gargutbehälters (13; 21; 24; 26) und
- eine mit der Datenübertragungseinrichtung (PS) verbundene Steuereinrichtung (SE), die dazu eingerichtet ist, den PEF-Signalgenerator (SG) beruhend auf den empfangenen Daten anzusteuern
und aufweisend einen Gargutbehälter (13; 21; 24; 26) nach einem der Ansprüche 1 bis 11.

## Claims

1. Removable container for products to be cooked (13; 21; 24; 26) for use in a PEF cooking appliance (P), having
- a treatment chamber (28) having at least two PEF electrodes (4, 5) between which products to be cooked (G) can be introduced and to which PEF signals pulsed with alternating polarity can be applied,
- at least one sensor (6, 7) and
- a sensor circuit (8; 14) comprising an energy supply device (9; 16) without a battery and DC-isolated from the PEF cooking appliance (P), an evaluation circuit (10) connected to the at least one sensor (6, 7) and the energy supply device (9; 16), and a data transmission device (11) connected to the evaluation circuit (10) and the energy supply device (9; 16), said data transmission device being set up to transmit data received from the evaluation circuit (10) in a non-electrical manner,
- wherein the sensor circuit (16) is able to be fed with electrical energy by means of the pulsed PEF signals applied to the container for products to be cooked (13; 21; 24; 26).

2. Container for products to be cooked (13) according to claim 1, wherein the sensor circuit (16) is able to be supplied with voltage via a series resistor (15) connected in series to the PEF electrodes (4, 5).

3. Container for products to be cooked (21) according to claim 1, wherein the sensor circuit (16) is able to be supplied with voltage via a capacitive voltage divider (19, 23) connected to one of the PEF electrodes (4).

4. Container for products to be cooked (24) according to claim 1, wherein the sensor circuit (14) is able to be supplied with voltage via an additional electrode (25) arranged between one of the PEF electrodes (4) and an additional electrode arranged between the PEF electrodes (4, 5) in the treatment chamber (28).

5. Container for products to be cooked (26) according to claim 1, wherein the sensor circuit (14) is able to be supplied with voltage via two additional electrodes (25, 27) arranged spaced apart from one another in the treatment chamber (28) between the PEF electrodes (4, 5).

6. Container for products to be cooked (13; 21; 24; 26) according to one of the preceding claims, wherein the energy supply device (9; 14) has a voltage rectifier (17), an energy store (19) and/or a voltage stabiliser (20).

7. Container for products to be cooked (13; 21; 24; 26) according to one of the preceding claims, wherein the data transmission device (11) is a data transmission device (11) transmitting data on the basis of radio, by inductive coupling, optically and/or acoustically.

8. Container for products to be cooked (13; 21; 24; 26) according to one of the preceding claims, wherein the at least one sensor (6, 7) comprises a temperature sensor.

9. Container for products to be cooked (13; 21; 24; 26) according to one of the preceding claims, wherein the at least one sensor (6, 7) comprises a conductivity sensor.

10. Container for products to be cooked (13; 21; 24; 26) according to one of the preceding claims, wherein the at least one sensor (6, 7) comprises a fill level sensor.

11. Container for products to be cooked (13; 21; 24; 26) according to one of the preceding claims, wherein the at least one sensor (6, 7) comprises an overflow sensor.

12. System (P, 13; 21; 24; 26),
having a PEF cooking appliance (P) having
- a PEF signal generator (SG) for generating PEF signals polarised in a commutating manner,
- a receiving space (AR) for the container for products to be cooked (13; 21; 24; 26) according to one of the preceding claims,
- connection mating contacts (GK) connected to outputs of the PEF signal generator for making contact with connection contacts (2, 3) of the container for products to be cooked (13; 21; 24; 26),
- a data transmission device (PS) for receiving data from the data transmission device (11) of the container for products to be cooked (13; 21; 24; 26) and
- a control device (SE) which is connected to the data transmission device (PS) and which is designed to control the PEF signal generator (SG) on the basis of the received data
and having a container for products to be cooked (13; 21; 24; 26) according to one of claims 1 to 11.

## Revendications

1. Récipient amovible pour produit à cuire (13 ; 21 ; 24 ; 26) pour une utilisation dans un appareil de cuisson PEF (P), présentant
- une chambre de traitement (28) avec au moins deux électrodes PEF (4, 5) entre lesquelles peut être introduit le produit à cuire (G) et auxquelles peuvent être appliqués des signaux PEF pulsés avec une polarité alternée,
- au moins un capteur (6, 7) et
- un circuit de capteur (8 ; 14), comprenant un dispositif d'alimentation en énergie (9 ; 16) sans batterie, isolé galvaniquement de l'appareil de cuisson PEF (P), un circuit d'évaluation (10) relié à l'au moins un capteur (6, 7) et au dispositif d'alimentation en énergie (9 ; 16), et un dispositif de transmission de données (11) relié au circuit d'évaluation (10) et au dispositif d'alimentation en énergie (9 ; 16), qui est configuré pour transmettre d'une manière non électrique des données reçues du circuit d'évaluation (10),
- dans lequel le circuit de capteur (16) peut être alimenté en énergie électrique au moyen des signaux PEF pulsés appliqués au récipient pour produit à cuire (13 ; 21 ; 24 ; 26).

2. Récipient pour produit à cuire (13) selon la revendication 1, dans lequel le circuit de capteur (16) peut être alimenté en tension au moyen d'une résistance en série (15) connectée en série aux électrodes PEF (4, 5) .

3. Récipient pour produit à cuire (21) selon la revendication 1, dans lequel le circuit de capteur (16) peut être alimenté en tension par un diviseur de tension (19, 23) capacitif relié à l'une des électrodes PEF (4).

4. Récipient pour produit à cuire (24) selon la revendication 1, dans lequel le circuit de capteur (14) peut être alimenté en tension par l'une des électrodes PEF (4) et une électrode additionnelle (25) disposée dans la chambre de traitement (28) entre les électrodes PEF (4, 5).

5. Récipient pour produit à cuire (26) selon la revendication 1, dans lequel le circuit de capteur (14) peut être alimenté en tension par deux électrodes additionnelles (25, 27) disposées à distance l'une de l'autre dans la chambre de traitement (28) entre les électrodes PEF (4, 5).

6. Récipient pour produit à cuire (13 ; 21 ; 24 ; 26) selon l'une des revendications précédentes, dans lequel le dispositif d'alimentation en énergie (9 ; 14) présente un redresseur de tension (17), un réservoir d'énergie (19) et/ou un stabilisateur de tension (20).

7. Récipient pour produit à cuire (13 ; 21 ; 24 ; 26) selon l'une des revendications précédentes, dans lequel le dispositif de transmission de données (11) est un dispositif de transmission de données (11) basé sur la radio, à couplage inductif, transmettant des données d'une manière optique et/ou acoustique.

8. Récipient pour produit à cuire (13 ; 21 ; 24 ; 26) selon l'une des revendications précédentes, dans lequel le au moins un capteur (6, 7) comprend un capteur de température.

9. Récipient pour produit à cuire (13 ; 21 ; 24 ; 26) selon l'une des revendications précédentes, dans lequel le au moins un capteur comprend un capteur de conductivité.

10. Récipient pour produit à cuire (13 ; 21 ; 24 ; 26) selon l'une des revendications précédentes, dans lequel le au moins un capteur (6, 7) comprend un capteur de niveau.

11. Récipient pour produit à cuire (13 ; 21 ; 24 ; 26) selon l'une des revendications précédentes, dans lequel le au moins un capteur (6, 7) comprend un capteur de débordement.

12. Système (P, 13 ; 21 ; 24 ; 26),
présentant un appareil PEF (P) présentant
- un générateur de signaux PEF (SG) pour produire des signaux PEF polarisés en commutation,
- un espace de réception (AR) pour le récipient pour produit à cuire (13 ; 21 ; 24 ; 26) selon l'une des revendications précédentes,
- des contre-contacts de raccordement (GK) reliés à des sorties du générateur de signaux PEF pour la mise en contact des contacts de raccordement (2, 3) du récipient pour produit à cuire (13 ; 21 ; 24 ; 26),
- un dispositif de transmission de données (PS) pour la réception de données du dispositif de transmission de données (11) du récipient pour produit à cuire (13 ; 21 ; 24 ; 26) et
- un dispositif de commande (SE), relié au dispositif de transmission de données (PS), qui est configuré pour commander le générateur de signaux PEF (SG) en se basant sur les données reçues et présentant un récipient pour produit à cuire (13 ; 21 ; 24 ; 26) selon l'une des revendications 1 à 11.
